# DEMANDE DE BREVET EUROPEEN

(11) **EP 0 610 169 A1**
(43) Date de publication de la demande: **10.08.1994**
(21) Numéro de dépôt: 94870017.4
(22) Date de dépôt: 02.02.1994
(51) Int. Cl.: A22C 7/00

(54) **Dispositif pour confectionner des boulettes de matière extrudable**

(30) Priorité: 02.02.1993 BE 9300102
(71) Demandeur: Van Hest, Cornelus Ludovicus Maria, NL-5051 AB Goirle (NL)
(72) Inventeur: Van Hest, Cornelus Ludovicus Maria, NL-5051 AB Goirle (NL); Geudens, Franciscus J.R., B-2480 Dessel (BE)
(74) Mandataire: De Palmenaer, Roger

(57) **Abrégé**

Des boulettes de viande pour le potage, des mignonnettes ou d'autres objets ronds de matière extrudable peuvent être confectionnées dans un dispositif comprenant un corps de remplissage (1) muni de plusieurs orifices ronds (4), une plaque coulissante (7) appliquée contre la plaque de fond au moyen d'un ressort et munie d'ouvertures (8) qui peuvent glisser par dessus les orifices susdits, un mécanisme d'entraînement (9) ayant un mécanisme de transmission à manivelle qui déplace la plaque coulissante (7) pour ouvrir et fermer lesdits orifices (4). La matière extrudable est normalement éjectée vers le bas sous forme de boulettes. Mais, lorsqu'une pression prédéterminée est dépassée, le flot de viande hachée repousse la plaque coulissante vers le bas en dépit de la force opposée exercée par le ressort (15) et une partie du flot de haché s'échappe par l'interstice formé entre la plaque de fond et la plaque coulissante.

## Description

La présente invention est relative à un dispositif pour confectionner des boulettes de matière extrudable, en particulier de viande hachée, de pâte ou d'autres matières ayant des propriétés plastiques. Elle trouve sa principale application dans l'industrie alimentaire, chez les traiteurs, dans les maisons de repos, les cliniques et les écoles pour confectionner des boulettes de viande pour le potage, de boulettes de haché et des fricadelles de haché, ainsi que des pommes mignonnettes et des beignets de pâte, des pastilles et des granulés de médicaments et divers aliments pour animaux.

Par le document GB-A-1.176.287, on connaît un dispositif pour préparer des boulettes de viande comportant un corps de remplissage dont une plaque de fond présente plusieurs ouvertures circulaires. Une plaque coulissante munie d'orifices identiques est actionnée sur la plaque de fond à l'aide d'un mécanisme qui fait glisser la plaque coulissante contre la plaque de fond, de telle manière que les orifices susdits s'ouvrent et s'obturent. Une matière extrudable est pressée dans le corps de remplissage par une conduite qui débouche dans le corps.

Les ouvertures de la plaque coulissante se répartissent le long d'une même circonférence que celles de la plaque de fond du corps de remplissage, de sorte que cette plaque puisse pivoter en va-et vient autour du centre de ladite circonférence.
Ce mouvement de va-et-vient de la plaque mobile est produit au moyen d'une bielle dont la course est à peu près égale au diamètre des orifices.
Ce procédé ne donne pas satisfaction parce qu'il est fastidieux et ne livre pas des boulettes parfaitement sphériques.
Grâce au pressage à l'aide de la vis sans fin la viande ou la pâte est refoulée de la machine. La matière superflue qui s'échappe vers l'extérieur par des interstices formés dans la conduite d'alimentation ou le corps de remplissage, ne peut pas être réutilisée.

La présente invention vise à pallier ces inconvénients et à réaliser un dispositif qui, malgré une construction simple et des dimensions réduites, traite de grandes quantités de viande hachée ou de pâte en petites boulettes, qui sont parfaitement rondes. Dans ce but, la présente invention propose un dispositif, du type décrit dans le premier paragraphe de ce mémoire. Le dispositif est destiné à traiter un matériau extrudable, en particulier de la viande hachée, de la pâte ou d'autres matières ayant des propriétés plastiques.

Suivant l'invention, on parvient à obtenir des performances élevées et une forme sphérique régulière, grâce à la caractéristique selon laquelle la plaque coulissante est appuyée contre la surface d'étanchéité de chaque orifice à l'aide d'un ressort. Dans une forme de réalisation particulière du dispositif selon l'invention, les orifices de la plaque coulissante présentent des bords tranchants.

Tandis que la viande hachée, pâte ou autres matières pâteuses sont repoussées sous pression dans le corps de remplissage du dispositif, les orifices de la plaque coulissante recouvrent et dégagent alternativement les orifices du fond du corps de remplissage. Le diamètre de la section du jet de matière qui est éjecté desdits orifices de section variable, varie sinusoidalement de zéro au diamètre maximal de l'orifice. Il augmente d'abord pour former la courbure semi-sphérique inférieure de la boulette et diminue ensuite pour former la courbure semi-sphérique supérieure.

Suivant un développement de l'invention, le déplacement sinusoïdal en va-et-vient de la plaque coulissante est produit au moyen d'un mécanisme de transmission à manivelle, dans lequel le déplacement total est à peu près égal au diamètre de l'ouverture.

Un interstice compris entre la plaque de fond du corps de remplissage et le plateau obturateur fait fonction de clapet de sécurité. Dans ce but, le plateau obturateur est appuyé contre la surface d'étanchéité de chaque orifice au moyen d'un ressort.

Grâce à la présence de la soupape de sécurité, l'extrémité libre du conduit d'alimentation peut être pourvu d'un joint d'étanchéité.

Le corps de remplissage est réalisé en deux parties constitué d'un coiffe en forme de cloche dans laquelle aboutit, suivant un axe longitudinal, une conduite d'alimentation, et une plaque de fond démontable qui est pourvue d'ouvertures réparties sur la périphérie.

Grâce au fait que la plaque de fond est démontable, la machine peut être livrée avec plusieurs plaques de fond comprenant des séries d'orifices de divers diamètres.

Le dispositif se monte sur la machine comme un accessoire au moyen d'un presse-étoupe. La combinaison d'un mécanisme de transmission à manivelle à vitesse variable et une plaque de fond avec dispositif de sécurité de la pression permet à l'opérateur d'adapter la forme des boulettes lors de chaque changement de diamètre.

Ces caractéristiques et particularités de l'invention ressortiront de la description détaillée suivante, faisant référence aux dessins ci-joints, qui à titre d'exemple et non limitativement illustre une forme de réalisation de l'invention.
Dans ces dessins :
- la figure 1 est une vue en perspective du dispositif illustré dans la figure 1, en position ouverte;
- la figure 2 est une coupe verticale du dispositif illustré dans la figure 1, en position ouverte;
- la figure 3 est une coupe identique à celle de la figure 2 en position fermée, et
- la figure 4 est une vue en plan de la plaque de fond du corps de remplissage.

Dans ces figures, les mêmes signes de référence désignent des éléments identiques ou analogues.

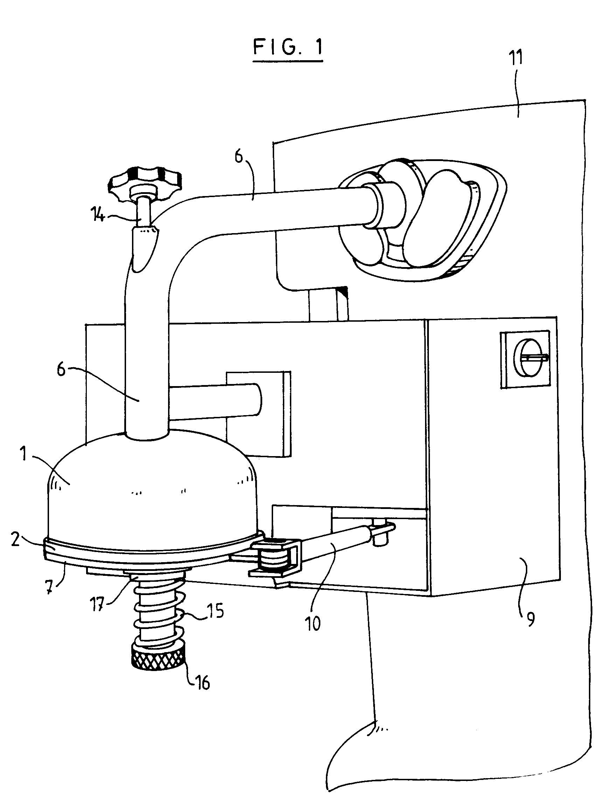

Comme illustré dans la figure 1, le dispositif pour confectionner des boulettes comprend un corps de remplissage 1 réalisé en deux parties constitué d'une coiffe en forme de cloche au milieu de laquelle débouche une conduite d'alimentation 6, une plaque de fond amovible pourvue d'une série d'orifices 4 ronds répartis à la périphérie, une plaque coulissante 7 munie d'une série d'ouvertures 8 qui peuvent coulisser sur la première série d'orifices et un mécanisme d'entraînement 9 qui actionne la plaque coulissante 7 en va-et-vient, de telle manière que les orifices 4 de la plaque de fond 2 du corps de remplissage s'ouvrent et se referment. Le mécanisme d'entraînement 9 est de préférence un mécanisme de transmission à manivelle qui actionne une bielle. La course totale de la bielle 10, doit au moins être environ égale au diamètre des orifices 4 et 8.

Le mécanisme de transmission à manivelle transforme le mouvement rotatif continu de l'arbre-manivelle du moteur d'entraînement en un mouvement rectiligne alternatif ayant un profil de vitesse périodique sinusoïdal. Le profil de vitesse détermine la structure très spécifique de l'obturation des orifices 4 de la plaque de fond du corps de remplissage 1. Le dispositif est apte à être monté en tant qu'accessoire sur une machine à bourrer qui sert à bourrer la saucisse. La machine à bourrer 11 refoule la viande hachée dans le manchon de remplissage 1 du dispositif par le conduit d'alimentation 6. Dès que la pression est atteinte dans le corps de remplissage 1, le mécanisme de transmission à manivelle est mis en marche et une bielle déplace ou fait tourner le plateau obturateur en va-et-vient des sorte que chaque orifice du plateau obturateur coulisse en va-et-vient le long d'un orifice voisin de la plaque de fond 2 du corps de remplissage 1.

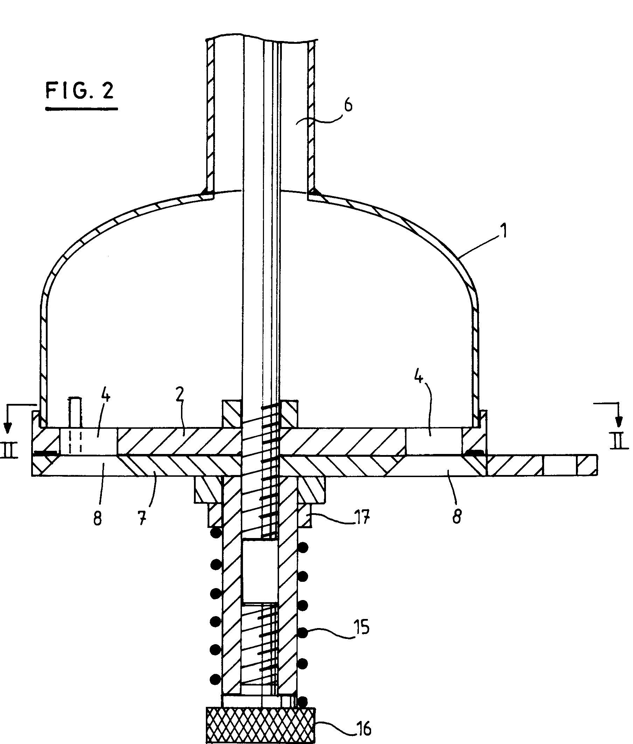

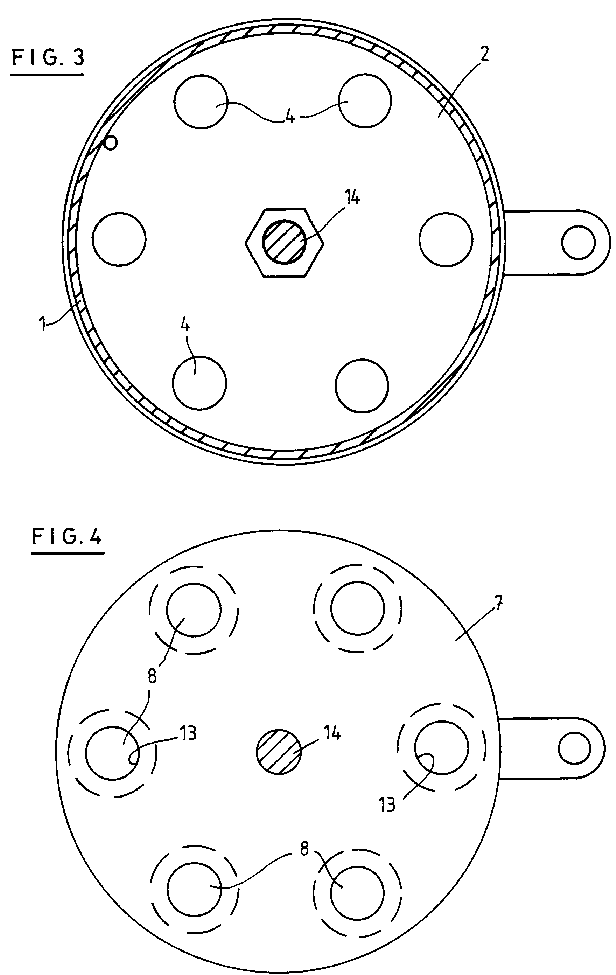

La viande hachée se déplace en direction de l'axe longitudinal du corps 1 vers chacun des orifices de la plaque de fond 1 du corps de remplissage. Dans la plaque de fond 2, illustrée dans la figure 4, des orifices se répartissent le long de la circonférence du corps de remplissage. La pression veille à une distribution homogène de la viande hachée dans le corps, de sorte que tous les orifices soient alimentés uniformément (fig. 2).

La vitesse angulaire de rotation du réducteur de vitesse qui actionne le mécanisme de transmission à manivelle atteint environ 100 à 300 t/min, de préférence 200 t/min, de sorte que le dispositif livre environ 2.000 boulettes par minute lorsque la plaque de fond 2 compte six orifices.

La viande hachée prend la forme d'un chapelet rectiligne de boulettes qui adhèrent à peine l'une à l'autre diamétralement dans la direction d'avancement.

La plaque coulissante 7, montrée dans la figure 4, est un plateau obturateur avec des orifices 8 identiques à ceux prévus dans la plaque de fond du corps de remplissage. Le plateau obturateur tourne de préférence d'une fraction de tour en va-et-vient autour de son centre. Lors du déplacement en va-et-vient de la plaque coulissante, tous les orifices de la plaque de fond, s'ouvrent et se ferment progressivement jusqu'à ouverture et fermeture complètes. Le fonctionnement de la plaque coulissante 7 ou du plateau obturateur est de loin meilleur lorsque les orifices 8 présentent des bords tranchants 13 (fig 2 et 3).

Pour faciliter le montage du dispositif sur la machine de bourrage, l'extrémité libre de la conduite d'alimentation est pourvue d'un presse-étoupe.

Dans une forme de réalisation préférée de l'invention, le corps de remplissage est réalisé en deux parties constituées d'un coiffe en forme de cloche dans laquelle la conduite d'alimentation débouche et d'une plaque de fond amovible pourvue d'orifices répartis autour de sa circonférence.

Pour remplir la fonction d'une soupape de sécurité, le plateau obturateur est appuyé contre les faces d'étanchéité de chaque orifice de la plaque de fond au moyen d'un ressort 15. Lorsqu'une pression prédéterminée est dépassée dans le corps de remplissage 1, le flot de viande hachée qui s'écoule repousse le plateau obturateur vers le bas en dépit de la force opposée exercée par le ressort 15 et du haché s'échappe jusqu'au moment ou la pression ne dépasse plus la valeur de consigne dans le corps de remplissage. La tension du ressort 15 est réglée par un écran de réglage 16 et une série de rondelles Belleville 17.

La plaque de fond 2 est amovible. Elle est fixée contre le corps de remplissage au moyen d'une pince 14 pourvue de filetages à ses deux extrémités.

La machine est livrée avec un jeu de plusieurs plaques de fond ayant des orifices de divers diamètres afin de permettre la confection de boulettes de viande de diverses dimensions.

## Revendications

1. Dispositif pour confectionner des boulettes de matière extrudable, en particulier de viande hachée, de pâte ou d'autres matières ayant des propriétés plastiques, comprenant :
un corps de remplissage (1) dont la plaque de fond présente plusieurs orifices circulaires (4), une plaque coulissante (7) pourvue d'orifices identiques (8), qui glissent sur la plaque de fond, un mécanisme d'entraînement qui actionne la plaque coulissante (7) en va-et-vient, de telle manière que les orifices (8) de la plaque de fond (2) du corps de remplissage (1) pour les ouvrir et les fermer et une conduite d'alimentation (6) qui débouche dans le corps de remplissage (1) et au travers de laquelle de la matière extrudable est refoulée dans le corps de remplissage (1), caractérisé en ce que la plaque coulissante (7) est appuyée contre les faces d'étanchéité de chacun des orifices (4, 8) au moyen d'un ressort (15).

2. Dispositif selon la revendication 1, caractérisé en ce que les orifices de la plaque coulissante (7) présentent des bords tranchants (13).

3. Dispositif selon l'une des revendications précédentes, caractérisé en ce que l'extrémité libre de la conduite d'alimentation (14) est pourvue d'un joint.

4. Dispositif selon l'une des revendications précédentes, caractérisé en ce que la conduite d'alimentation (14) débouche dans le corps de remplissage, le long de l'axe longitudinal du corps de remplissage (1).

5. Procédé pour confectionner des boulettes d'une matière extrudable, en particulier de viande hachée, caractérisé en ce qu'on bourre la viande dans le corps de remplissage (1) du dispositif par le biais de la conduite d'alimentation (14), à l'aide d'une machine à bourrer les saucisses.
